# EUROPÄISCHE PATENTSCHRIFT

(11) **EP 1 438 926 B1**
(45) Veröffentlichungstag und Bekanntmachung des Hinweises auf die Patenterteilung: **23.11.2011**
(21) Anmeldenummer: 03028561.3
(22) Anmeldetag: 11.12.2003
(51) Int. Cl.: A61C 13/00

(54) **Verfahren und Vorrichtung zur Herstellung eines Dentalproduktes, insbesondere einer dentalen Restauration**
Method and device of making a dental product, in particular a dental restoration
Procédé et dispositif de fabrication d'un produit dentaire, en particulier d'une restauration dentaire

(30) Priorität: 17.01.2003 DE 10301643
(43) Veröffentlichungstag der Anmeldung: 21.07.2004
(73) Patentinhaber: Ivoclar Vivadent AG, 9494 Schaan (LI)
(72) Erfinder: Rathke, Andreas Dr., 9494 Schaan (LI); Reindl, Andreas, 6832 Batschuns (AT); Kretschmar, Frank A., 88131 Lindau (DE); Bertsch, Diethard, 6811 Göfis (AT)
(74) Vertreter: Baronetzky, Klaus

(56) Entgegenhaltungen:
- EP-A- 1 088 526
- WO-A-01/37757
- DE-A- 19 714 526
- DE-A- 19 922 870
- US-A- 4 478 580

## Beschreibung

Die Erfindung betrifft ein Verfahren zur Herstellung eines Dentalprodukts, insbesondere einer dentalen Restauration, gemäß dem Oberbegriff von Anspruch 1 sowie eine Dentalrestaurationsvorrichtung gemäß dem Oberbegriff von Anspruch 19.

Es ist seit langem bekannt, Dentalrestaurationsverfahren und Dentalrestaurationsvorrichtungen einzusetzen, um basierend auf vorgegebenen Daten Dentalprodukte herzustellen. Dies erfolgt regelmäßig in einer Bearbeitungsvorrichtung, die in der Regel materialabhebend und bevorzugt durch Fräsen oder Schleifen die gewünschten Bearbeitungen vornimmt.

Seit einiger Zeit werden Bearbeitungsverfahren auch im Dentalbereich eingesetzt, um rechnergesteuert ein möglichst präzises Restaurationsergebnis zu erzielen. Hierzu wird in einem Dentallabor basierend auf den Informationen aus der Zahnarztpraxis, die beispielsweise die Übermittlung eines Abdrucks der Kiefersituation des betreffenden Patienten in das Dentallabor umfassen können, eine virtuelle Restauration erzeugt und als Datenpaket an ein Bearbeitungszentrum übermittelt. Nachdem der erforderliche maschinelle Aufwand im Bereich des Bearbeitungszentrums nicht unbeachtlich ist, ist es günstig, wenn mehrere Dentallabors Ihre Daten dem gleichen Bearbeitungszentrum übermitteln, um dort die erwünschten Bearbeitungen vornehmen zu lassen.

Andererseits ist es bekannt, dass jede Bearbeitungsmaschine überwacht werden sollte, um das Entstehen von fehlerhaften Teilen zu verhindern. Dies kann beispielsweise durch eine einfache Überwachungsvorrichtung geschehen, die auch den Verfahrensablauf als gesamtes Verfahren überwachen kann und die Bedienperson im Bearbeitungszentrum alarmiert, wenn ein Fehler entsteht.

Gerade wenn mehrere Dentallabors mit einem Bearbeitungszentrum zusammenarbeiten, besteht das Problem, dass das Bearbeitungszentrum festlegt, welche Art Daten als Auftragsdaten von den Dentallabors bereitgestellt werden sollen. Je nach dem Programm, das das Dentallabor verwendet, können aber kleine Unterschiede zwischen den Auftragsdaten bestehen. Meist lässt sich beispielsweise bei der Erfassung eines Modells zur Erzeugung der virtuellen Restauration auch vom Benutzer einstellen, wieviele Messpunkte eingesetzt werden sollen. Üblicherweise werden triangulierte Flächen festgelegt und als Auftragsdaten vorgegeben. Allein schon, wenn die Maschenweite des Netzes der triangulierten Flächen verändert wird, entstehen erhebliche Unterschiede in den Auftragsdaten, und die Auftragsdaten müssen anders interpretiert werden, wenn sich beispielsweise die Maschenweite des Netzes in einem kritischen Bereich der Restauration reduziert.

Aufgrund der komplexen erforderlichen Arbeitsvorgänge allein im Bearbeitungsrechner, der aus den Auftragsdaten die Steuerdaten, die maschinenlesbar sind, erzeugen soll, ist es erforderlich, dass das Restaurationsergebnis, also das fertige Dentalprodukt, zumindest dem Grunde nach kontrolliert wird.

Ein weiteres Problem bei der Realisierung eines Bearbeitungszentrums, das mehrere Dentallabors versorgt, ist die Zuordnung der Aufträge zu dem je beauftragenden Labor. Es ist an sich bekannt, über sogenannte Fakturierprogramme für eine zutreffende Auftragsabwicklung und gleich auch Rechnungsstellung zu sorgen. Die Verlässlichkeit derartiger Systeme hängt jedoch stark davon ab, wie vollständig die betreffenden Aufträge eingegeben werden; zur Vermeidung von Fehlern ist es regelmäßig erforderlich, einen weiteren Mitarbeiter im Bereich des Bearbeitungszentrums mit der Kontrolle zu befassen.

Auch wenn moderne Bearbeitungsmaschinen meist eine integrierte Überwachungsvorrichtung aufweisen, die den Werkzeugverschleiß und gegebenenfalls beim Bearbeiten induzierte Schwingungen erfasst und entsprechende Warnsignale abgibt, ist eine visuelle Prüfung des fertigen Dentalprodukts erforderlich, um auszuschließen, dass nicht die maschineninterne Kontrolle fehlerbehaftet arbeitet.

Nachdem die Bearbeitung in dem Bearbeitungszentrum, das mehrere Dentallabors bedient, aus den vorstehend genannten Gründen fehlerintensiv ist beziehungsweise zahlreiche besondere Maßnahmen zur Fehlerbekämpfung erfordert, ist es auch vorgeschlagen worden, ein einfacheres Bearbeitungszentrum im Dentallabor selbst zu installieren. Aus Kostengründen kommen hier nur größere Dentallabors in Betracht. Auch in diesem Fall sind dem Kostenrahmen enge Grenzen gesetzt, so dass auf möglichst kostengünstige Maschinen zurückgegriffen werden muss.

Hier sei unter Bearbeitungszentrum eine Station mit einem Bearbeitungsrechner und einer Bearbeitungsvorrichtung zu verstehen, die beliebig mit den entsprechenden Daten versorgt werden kann und das Dentalprodukt erzeugt, also unabhängig davon, ob sie räumlich getrennt von dem Dentallabor oder in diesem Labor aufgestellt ist.

Dokument DE 19922870 offenbart ein Verfahren zur Herstellung eines Dentalprodukts gemäß dem Oberbegriff des Anspruchs 1.

Demgegenüber liegt der Erfindung die Aufgabe zugrunde, ein Verfahren zur Herstellung eines Dentalprodukts, insbesondere einer dentalen Restauration, gemäß dem Oberbegriff von Anspruch 1 sowie eine Dentalrestaurationsvorrichtung gemäß dem Oberbegriff von Anspruch 19, und zugehörige Bearbeitungsverfahren sowie Bearbeitungsvorrichtungen zu schaffen, die effizienter arbeiten, aber dennoch eine höhere Akzeptanz bei den Dentallabors bieten.

Diese Aufgabe wird erfindungsgemäß durch Anspruch 1, beziehungsweise Anspruch 19 gelöst. Vorteilhafte Weiterbildungen ergeben sich aus den Unteransprüchen.

Überraschend lassen sich mit dem erfindungsgemäßen Maßnahmen die Dentalprodukte mit einem wesentlich verbesserten Qualitätsstandard zuverlässig herstellen, und auf Grund der Realisierung der erfindungsgemäßen Kontrollvorrichtung ist eine Überwachung der Auftragsbearbeitung möglich. Dennoch sind keine oder keine wesentlichen Mehrkosten erforderlich, denn die Kontrollvorrichtung kann auch bereits vorhandene Rechner ausnutzen, um die Kontrollfunktion zu realisieren.

In einer ersten Ausführungsform der erfindungsgemäßen Lösung überprüft die Kontrollvorrichtung die von dem Bearbeitungsrechner erzeugten Daten und vergleicht sie mit den Auftragsdaten. Auch bei dieser Lösung kann bereits eine Auftragskontrolle realisiert sein, die den betreffenden Bearbeitungsauftrag dem auftraggebenden Dentallabor zuordnet und sicherstellt, dass sowohl die vorgegebenen Erledigungszeiten eingehalten werden als auch dass das zutreffende Dentalprodukt für den Versand an das betreffende Dentallabor vorbereitet wird, beispielsweise durch eine numerische Identifikation oder eine Identifikation in Klarschrift, aber auch, dass die Fakturierung in richtiger Weise eingeleitet wird.

In einer weiteren Ausführungsform lässt sich eine noch weiter gehende Qualitätskontrolle des Dentalprodukts erreichen. Die Bearbeitungsmaschine wird anstelle des Bearbeitungswerkzeugs mit einem optischen oder mechanischen Abtaster bestückt - sei es automatisch - sei es manuell. Der Abtaster überprüft dann die Form des hergestellten Dentalprodukts. Die gescannten Daten werden dann in der Kontrollvorrichtung mit den Steuerdaten und/oder mit den Auftragsdaten verglichen, so dass sichergestellt ist, dass nicht durch fehlerhafte Bearbeitung ein fehlerhaftes Dentalprodukt entsteht.

Besonders günstig bei dieser zweiten Ausführungsform ist es, dass das Dentalprodukt in der gleichen Position belassen werden kann. Die Bereitstellung von Referenzkoordinaten ist dadurch wesentlich erleichtert, so dass zusätzliche Fehlerquellen ausgeschlossen werden. Diese Lösung kommt vor allem dann in Betracht, wenn der Scanvorgang wesentlich kürzer als der Bearbeitungsvorgang ist.

In einer dritten Ausführungsform wird das Dentalprodukt aus der Bearbeitungsmaschine entnommen und gescannt, und die gescannten Daten werden der Kontrollvorrichtung zu Vergleichzwecken zugeleitet.

Es versteht sich, dass die erfindungsgemäße Abtastung nicht auf eine mechanische Abtastung beschränkt ist. Vielmehr kann auch ohne Weiteres bei der Lösung gemäß der vorstehenden weiteren bevorzugten Ausführungsform der Werkzeugkopf durch einen Scankopf ersetzt werden, der die Möglichkeit des optischen Scannens bietet.

Besonders günstig ist es auch, dass der Scanner die Daten in dem gleichen Format abliefert wie der für die virtuelle Restauration eingesetzte Scanner in dem Dentallabor oder der Zahnarztpraxis. Es kann sogar der gleiche Typ verwendet werden, um Toleranzen so gering wie möglich zu halten. Die Daten liegen typischerweise als ASCII-Dateien einer Punktewolke vor, wobei als Referenzpunkte die Markierungen der Präparationsgrenzen verwendet werden. Es versteht sich, dass aber auch beliebige andere geeignete Maßnahmen zur Erzeugung von Referenzen eingesetzt werden können. Die gescannten Daten können entweder ungeglättet oder geglättet verglichen werden, und es ist möglich, die Rasterung so weit aneinander anzunähern, dass hier Rasterfehler ausgeschlossen sind. Aus der Punktewolke können aber auch .stl-Daten durch Triangulation erzeugt werden, und es versteht sich, dass auch die .sti.-Auftragsdaten verglichen werden können.

Wesentlich ist es erfindungsgemäß jedenfalls, dass die Auftragsdaten unabhängig von den Ausgangsdaten des Scanners oder Abtasters erzeugt werden, so dass eine echte Qualitätskontrolle möglich ist. Es ist auch möglich, die Vergleichsdaten zusammen mit dem Dentalprodukt an das Auftrag gebende Dentallabor zurückzusenden, um gleichsam einen Beleg für die Qualität und die erfolgte Kontrolle beizubringen.

In einer weiteren Ausgestaltung ist es möglich, den Scanner oder Abtaster mit der Bearbeitungsvorrichtung so zu koppeln, dass eine spezielle Software eine lageunabhängige Positionierung der Restauration im Scanner ermöglicht.

Mit der erfindungsgemäßen Lösung kann auch verhindert werden, dass Dentalprodukte ausgeliefert werden, die durch Schwingungen während des Bearbeitens eine gewellte Oberfläche haben. Um dies zu verhindern, wurde bislang mit einer vergleichsweise geringen Vortriebsgeschwindigkeit beim Bearbeiten gearbeitet. Je höher die Vortriebsgeschwindigkeit und der Materialabtrag pro Zeit ist, desto leichter kommt es beim Bearbeiten zu einer Schwingung oder gegebenenfalls zu einem Bruch des Rohlings. Erfindungsgemäß lässt sich die Bearbeitungsgeschwindigkeit erhöhen, und durch die erfindungsgemäße Kontrollvorrichtung ist sichergestellt, dass dennoch lediglich unversehrte Dentalprodukte zur Auslieferung gelangen. Überraschend lässt sich beim Ausnutzen dieser Tatsache die Zykluszeit für die Erzeugung eines Dentalprodukts insgesamt betrachtet sogar reduzierten, obwohl der zusätzliche Abtastschritt vorgenommen wird. Auch kostenmäßig fällt eine Erhöhung des Ausschusses von beispielsweise 0,1 auf 1 % praktisch nicht ins Gewicht, nachdem die vorhandene Bearbeitungsvorrichtung und auch das gesamte Bearbeitungszentrum sich erfindungsgemäß besser ausnutzen lässt und daher gewinnbringender arbeitet.

Die Qualitätsnormen gemäß ISO 9000 ff lassen sich erfindungsgemäß realisieren, nachdem ein Abgleich zwischen Auftrag und Fertigung möglich ist. Die Qualitätsanmutung für das Dentallabor als Kunden des Bearbeitungszentrums oder das Bearbeitungszentrum ist wesentlich größer, wenn dem Dentallabor auch gleich die Abtastdaten zur Kontrolle mitgeschickt werden.

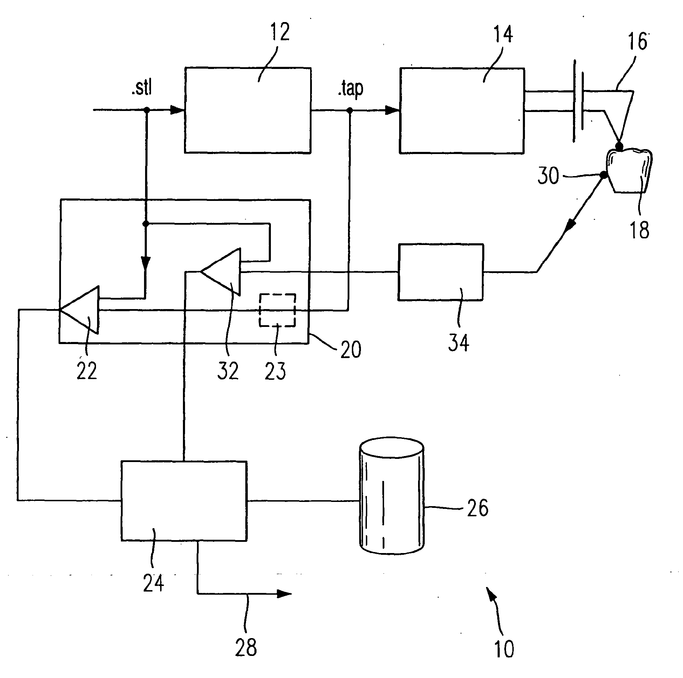

Weitere Vorteile, Einzelheiten und Merkmale ergeben sich der nachfolgenden Beschreibung eines Auführungsbeispiels der Erfindung anhand der Zeichnung.

Die einzige Figur der Zeichnung zeigt eine schematische Ansicht einer erfindungsgemäßen Bearbeitungsvorrichtung zur Ausführung eines erfindungsgemäßen Bearbeitungsverfahren in einer Ausführungsform.

Das in der Figur dargestellte Bearbeitungszentrum 10 weist einen Bearbeitungsrechner 12 auf, der in an sich bekannter Weise aus Auftragsdaten Steuerdaten erzeugt. Mit den Steuerdaten werden Bearbeitungsmaschinen gesteuert, wobei in der dargestellten Ausführungsform lediglich eine Bearbeitungsmaschine 14 dargestellt ist, obwohl tatsächlich mehrere, beispielsweise vier oder sogar acht Bearbeitungsmaschinen, als Bearbeitungsvorrichtung eingesetzt werden können.

In an sich bekannter Weise weist die NC-Fräsmaschine eine fünf- oder sechsachsige Steuerung eines Bearbeitungswerkzeugs 16 auf, das aus einem nicht dargestellten Vorrat an Bearbeitungswerkzeugen von der Bearbeitungsmaschine 14 gesteuert, entnommen und eingesetzt werden kann.

Die NC-Fräsmaschine 14 erzeugt in an sich bekannter Weise aus einem Rohling ein Dentalprodukt 18 in einer Qualität und Kontur, wie sie von den Auftragsdaten vorgegeben ist.

Die Auftragsdaten werden von einem hier nicht dargestellen Dentallabor angeliefert, sei es über Datenfernübertragung, über Diskette oder auf einer CD gebrannt. Erfindungsgemäß ist es vorgesehen, dass das betreffende dentaltechnische Labor Auftragsdaten mit einer Kennung versehen anliefert, die eine eindeutige Identifizierung ermöglichen.

Erfindungsgemäß ist eine Kontrollvorrichtung 20 vorgesehen, die eine Rückmeldung während und/oder nach der Bearbeitung im Bearbeitungszentrum ermöglicht. Die Kontrollvorrichtung 20 weist einen ersten Vergleicher 22 auf, der die Steuerdaten mit den Auftragsdaten mindestens indirekt vergleicht.

Der Vergleich kann beispielsweise durch eine entsprechende Umrechnung erfolgen, so dass der Bearbeitungsrechner kontrolliert wird.

Es versteht sich, dass die Auftragsdaten mit den Steuerdaten nicht unmittelbar verglichen werden können, da es sich je um ein anderes Datenformat handelt. Dementsprechend kann der Vergleich entweder so erfolgen, dass die Steuerdaten in Auftragsdaten umgewandelt werden, so dass durch den Vergleich der zweifach transformierten Auftragsdaten mit den Originaldaten ein Abgleich möglich ist. Alternativ ist es auch möglich, im Vergleicher eingangsseitig der Auftragsdaten eine Datentransformation vorzunehmen, die dann praktisch den Bearbeitungsrechner 12 kontrolliert.

Ein geeigneter Datentransformator ist in der Figur bei dem Bezugszeichen 23 gestrichelt angedeutet.

Das Vergleichsergebnis wird einer Auswertevorrichtung 24 zugeleitet, die das Vergleichsergebnis in geeigneter Weise auswertet. Beispielsweise kann es angezeigt werden und ein Alarm ausgelöst werden, wenn eine Abweichung entsteht. Über eine Speichervorrichtung 26 kann die Bearbeitung kontinuierlich gespeichert werden, was Rückschlüsse auf die Auslastung und Qualität der Bearbeitung in dem Bearbeitungszentrum ermöglicht. Auch ist es möglich, dass die Auswertvorrichtung die Daten dem beauftragenden Dentallabor zurück übermittelt, so dass eine vorab Information vorliegt, wenn der Auftrag bearbeitet wird. Dies kann über eine Datenleitung 28 geschehen, die auch mit der Datenleitung für die Anlieferung der Daten übereinstimmen kann.

In weiterer Ausgestaltung der erfindungsgemäßen Lösung ist es vorgesehen, dass mit einem Abtaster 30, der bei Bedarf auch von der Bearbeitungsmaschine 14 geführt sein kann, die Kontur des Dentalprodukts 18 - sei es kontinuierlich oder sei es nach Abschluss der Fräs- oder sonstigen Bearbeitung - erfasst wird. Die so gescannten Daten werden der Kontollvorrichtung 20 zugeleitet, die einen weiteren Vergleicher 32 aufweist, der die gescannten Daten entweder mit den Auftragsdaten oder mit Steuerdaten vergleicht. In dem dargestellten Ausführungsbeispiel ist für die Zuführung der gescannten Daten zu der Kontrollvorrichtung 20 ein Konverter 34 vorgesehen, der eine Datenaufbereitung vornimmt.

Die von dem Vergleicher 32 erfassten Daten können ebenfalls der Auswertevorrichtung 24 zugeführt werden, die dann auch die Daten auswertet.

Es versteht sich, dass anstelle der hier vorgesehenen kombinierten Ausgestaltung der Kontrollvorrichtung einer der Vergleicher 22 und 32 entfallen kann. Jedenfalls erfolgt erfindungsgemäß eine Rückmeldung hinsichtlich des Bearbeitungsergebnisses, die auch eine weitere Rückmeldung an das Dentallabor ermöglicht.

## Patentansprüche

1. Verfahren zur Herstellung eines Dentalproduktes (18), insbesondere einer Dentalrestauration, mit den Schritten:
- Herstellung einer Abformung und gegebenenfalls eines Modells der Abformung, gegebenenfalls nach Versendung an ein Dentallabor;
- Scannen der Abformung oder des Modells;
- Erzeugen eines Auftragsdatenpaketes, gegebenenfalls als virtuelle Restauration, basierend auf dem Scannergebnis;
- Versenden an ein Bearbeitungszentrum (10);
- Umwandlung in einem Bearbeitungsrechner (12) der Auftragsdaten des Auftragsdatenpakets in Steuerdaten für die maschinelle Bearbeitung;
- Senden der Steuerdaten an eine Bearbeitungsmaschine (14);
- Erstellen des Dentalproduktes (18), insbesondere der Dentalrestauration;
- Versenden der Restauration an das Dentallabor oder den Zahnarzt;
- Prüfen der Restauration auf Passung auf dem Modell;
- Fertigstellen der Restauration, gegebenenfalls durch farbliche Anpassung oder Verblendung;
- gegebenenfalls Versenden der Restauration an den Zahnarzt; und
- Prüfen der Restauration auf Ausführung, Passung und Ästhetik;
**dadurch gekennzeichnet, dass** nach der Herstellung des Dentalprodukts (18) und vor dem Versenden des Dentalprodukts (18) die folgenden Verfahrensschritte durchgeführt werden:
- Erzeugung eines Datenpakets des Dentalproduktes (18) im Datenformat der Auftragsdaten;
- Durchführung eines Datenvergleichs zwischen den Auftragsdaten und dem Datenpaket des Dentalprodukts (18).

2. Verfahren nach Anspruch 1,
**dadurch gekennzeichnet, dass** für die Bereitstellung der Auftragsdaten ein Modell im Dentallabor oder der Zahnarztpraxis erstellt und gescannt und hierdurch die virtuelle Restauration erzeugt wird und dass die Auftragsdaten dem Bearbeitungszentrum (10) übermittelt werden.

3. Verfahren nach Anspruch 1 oder 2,
**dadurch gekennzeichnet, dass** das Scannen des Dentalproduktes (18) in dem Bearbeitungszentrum (10) erfolgt und das Scannergebnis mit den Auftragsdaten verglichen wird, wobei vorab Toleranzwerte festgestellt werden, bei deren Überschreitung ein Vergleicher (22) das Dentalprodukt (18) zurückweist.

4. Verfahren nach einem der vorhergehenden Ansprüche,
**dadurch gekennzeichnet, dass** die Datenumwandlung von Auftragsdaten in Steuerdaten von einem im Bearbeitungszentrum (10) befindlichen Bearbeitungsrechner (12) durchgeführt wird.

5. Verfahren nach einem der vorhergehenden Ansprüche,
**dadurch gekennzeichnet, dass** der Vergleicher (22) in einer Kontrollvorrichtung (20) arbeitet, wobei der Bearbeitungsrechner (12) an den Vergleicher (22) angeschlossen ist, und wobei die Durchführung des Datenvergleichs zwischen den Auftragsdaten und den von dem Bearbeitungsrechner (12) bearbeiteten Daten des Dentalproduktes (18) im Vergleicher (22) erfolgt.

6. Verfahren nach einem der vorhergehenden Ansprüche,
**dadurch gekennzeichnet, dass** ein weiterer Vergleicher (32) vorgesehen ist, der in der Kontrollvorrichtung (20) arbeitet, wobei die im Bearbeitungszentrum (10) gescannten Daten der Dentalrestauration entweder mit den Auftragsdaten oder mit Steuerdaten verglichen werden.

7. Verfahren nach einem der vorhergehenden Ansprüche,
**dadurch gekennzeichnet, dass** beim Scannen in dem Bearbeitungszentrum (10) Daten in einem Format erzeugt werden, die dem Format der Auftragsdaten entsprechen.

8. Verfahren nach einem der vorhergehenden Ansprüche,
**dadurch gekennzeichnet, dass** das Scannen des Dentalproduktes (18) erfolgt, während das Dentalprodukt (18) noch in der Herstellvorrichtung eingespannt ist und insbesondere das Bearbeitungswerkzeug (16) hierzu gegen eine optische oder mechanische Abtastung getauscht wird.

9. Verfahren nach einem der Ansprüche 1 bis 7,
**dadurch gekennzeichnet, dass** das Scannen des Dentalproduktes (18) außerhalb der Herstellvorrichtung vorgenommen wird und der Scanner eine Positionierungsvorrichtung aufweist, über welche das Dentalprodukt (18) koordinatenrichtig erfassbar ist.

10. Verfahren nach einem der vorhergehenden Ansprüche,
**dadurch gekennzeichnet, dass** die von dem Bearbeitungsrechner (12) bearbeiteten Daten gescannte Daten sind, die von der Bearbeitung des Dentalprodukts (18) durch die Bearbeitungsmaschine beeinflusst werden, dass das fertige Dentalprodukt (18) gescannt wird und die gescannten Daten der Kontrollvorrichtung (20) zugeleitet werden.

11. Verfahren nach einem der vorhergehenden Ansprüche,
**dadurch gekennzeichnet, dass** die Kontrollvorrichtung (20) auch die Abarbeitung des Bearbeitungsauftrags erfasst und rückmeldet.

12. Verfahren nach einem der vorhergehenden Ansprüche,
**dadurch gekennzeichnet, dass** der Bearbeitungsrechner (12) für die Bereitstellung der Auftragsdaten Punktkoordinaten durch Triangulation in triangulierte Flächen umwandelt und dass beim Scannen des Dentalprodukts (18) ebenfalls Punktkoordinaten durch Triangulation in triangulierte Flächen umgewandelt werden und dass die Auftragsdaten mit den gescannten Daten in der Kontrollvorrichtung (20) verglichen werden.

13. Verfahren nach einem der vorhergehenden Ansprüche,
**dadurch gekennzeichnet, dass** das Scannen innerhalb des Bearbeitungszentrums (10) erfolgt und insbesondere ein mechanisches Abtasten aufweist.

14. Verfahren nach einem der vorhergehenden Ansprüche,
**dadurch gekennzeichnet, dass** die Kontrollvorrichtung (20) die Bearbeitungsmaschine (14) kontinuierlich überwacht und die Bearbeitungsmaschine (14) beim Auftreten von Schwingungen, deren Amplitude ein vorgegebenes Maß übersteigt, abschaltet.

15. Verfahren nach einem der vorhergehenden Ansprüche,
**dadurch gekennzeichnet, dass** der Bearbeitungsrechner (12) mehrere, beispielsweise zwei bis zehn oder insbesondere vier Bearbeitungsmaschinen steuert.

16. Verfahren nach einem der vorhergehenden Ansprüche,
**dadurch gekennzeichnet, dass** das Bearbeitungszentrum (10) über Datenfernübertragungsleitungen (28) mit einem oder mehreren Dentallabors in Verbindung steht und die Auftragsdaten von den Dentallabors empfängt.

17. Verfahren nach einem der vorhergehenden Ansprüche,
**dadurch gekennzeichnet, dass** für die Erfassung der Form des Dentalprodukts (18) die Bearbeitungsmaschine (14) anstelle des Bearbeitungswerkzeugs (16) einen optischen oder mechanischen Abtaster (30)verwendet und das Dentalprodukt (18) abtastet.

18. Verfahren nach einem der vorhergehenden Ansprüche,
**dadurch gekennzeichnet, dass** die Kontrollvorrichtung (20) sowohl die Maschinendaten mit den Auftragsdaten als auch die gescannten Daten mit den Auftragsdaten vergleicht.

19. Dentalrestaurationsvorrichtung zur Erstellung eines Dentalproduktes (18), die in einem Bearbeitungszentrum (10) vorgesehen ist und mit einer in einem Bearbeitungsrechner (12) für die Ansteuerung einer Bearbeitungsvorrichtung, mit welcher.das Dentalprodukt (18) herstellbar ist, wobei mit dem Bearbeitungsrechner (12) eine Datenumwandlung von Auftragsdaten in Steuerdaten vornehmbar ist, mit welchen mindestens eine Bearbeitungsmaschine (14) steuerbar ist,
**dadurch gekennzeichnet, dass** eine Kontrollvorrichtung (20) vorgesehen ist, die einen Vergleicher (22) aufweist, an den der Bearbeitungsrechner (12) angeschlossen ist, welcher Vergleicher (22) die Auftragsdaten mit von dem Bearbeitungsrechner (12) mindestens indirekt erzeugten Daten eines Dentalproduktes (18) vergleicht, wobei die Auftragsdaten durch Scannen einer Abformung oder eines Modells als ein Datenpaket ermittelbar und an die Dentalrestaurationsvorrichtung übermittelbar sind.

20. Dentalrestaurationsvorrichtung nach Anspruch 19,
**dadurch gekennzeichnet, dass** die Auftragsdaten eine virtuelle Restauration darstellen.

21. Dentalrestaurationsvorrichtung nach einem der Ansprüche 19 oder 20, **dadurch gekennzeichnet, dass** ein Scanner oder Abtaster (30) vorgesehen ist, mit welchem das erzeugte Dentalprodukt (18) scannbar ist, wobei der Vergleicher (22) an den Ausgang des Scanners oder Abtasters (30) angeschlossen ist, um dessen Ausgangsdaten mit den Auftragsdaten zu vergleichen.

## Claims

1. A method for producing a dental product (18), in particular a dental restoration, said method comprising the steps of:
- producing a plastic impression and a design model of the plastic impression, if necessary, possibly after the sending to a dental laboratory;
- scanning the plastic impression or the design model thereof;
- generating an order data packet, if necessary as a virtual restoration, based on the scanning result;
- sending the order data packet to a machining centre (10);
- converting the order data of the order data packet into control data for controlling the machining operation in a processing computer (12);
- sending the control data to a production machine (14);
- producing the dental product (18), in particular the dental restoration;
- sending the dental restoration to the dental laboratory or the dentist;
- checking, if the dental restoration fits or conforms to the model;
- finishing the restoration, if necessary by means of colour adjustment or a veneer;
- if necessary, sending the restoration to the dentist; and
- checking the restoration for design, fit or conformity and aesthetics;
**characterized in that** after the production of the dental product (18) and prior to the sending of the dental product (18) the following process steps are carried out:
- producing a data packet of the dental product (18) having the data format of the order data;
conducting a data comparison between the order data and the data packet of the dental product (18).

2. The method according to claim 1,
**characterized in that** a design model is produced and scanned in the dental laboratory or dental office for providing the order data, by means of which the virtual restoration is generated, and that the order data is transmitted to the machining centre (10).

3. The method according to claim 1 or 2,
**characterized in that** the scanning operation of the dental product (18) is conducted in the machining centre (10) and the scanning result is compared to the order data, wherein limits of tolerance are determined in advance and, if those limits are exceeded, a comparator (22) rejects the dental product (18).

4. The method according to one of the preceding claims,
**characterized in that** the data conversion of order data into control data is conducted by a processing computer (12) located within the machining centre (10).

5. The method according to one of the preceding claims,
**characterized in that** the comparator (22) operates within a control device (20), with the processing computer (12) being coupled to the comparator (22), and wherein the accomplishment of the data comparison between the order data and the data of the dental product (18) that has been processed by the processing computer (12), takes place in the comparator (22).

6. The method according to one of the preceding claims,
**characterized in that** a further comparator (32) is provided for operation within the control device (20), wherein the data of the dental restoration which has been scanned in the machining centre (10), is either compared to the order data or the control data.

7. The method according to one of the preceding claims,
**characterized in that** during the scanning operation in the machining centre (10) data is produced in a format that corresponds to the format of the order data.

8. The method according to one of the preceding claims,
**characterized in that** the scanning operation of the dental product (18) occurs while the dental product (18) is still restrained in the production device, and in particular the machining tool (16) is exchanged for an optical or mechanical scanning operation.

9. The method according to one of the claims 1 to 7,
**characterized in that** the scanning operation of the dental product (18) is conducted exteriorly of the production device and that the scanner comprises a positioning device via which the dental product (18) can be detected in correct orientation with respect to a coordinate system.

10. The method according to one of the preceding claims,
**characterized in that** the data which has been processed by the processing computer (12) is scanned data that is influenced by the machining operation of the dental product (18) through the production machine, that the finished dental product (18) is scanned and that the scanned data is supplied to the control device (20).

11. The method according to one of the preceding claims,
**characterized in that** the control device (20) also collects and confirms the execution of the machining order.

12. The method according to one of the preceding claims,
**characterized in that** the processing computer (12) converts point coordinates into triangulated surfaces by means of triangulation for providing the order data, and that during the scanning operation of the dental product (18) point coordinates are also converted into triangulated surfaces by means of triangulation and that the order data is compared to the scanned data in the control device (20).

13. The method according to one of the preceding claims,
**characterized in that** the scanning operation takes place within the machining centre (10) and in particular comprises a mechanical scanning operation.

14. The method according to one of the preceding claims,
**characterized in that** the control device (20) continuously monitors the production machine (14), and that the production machine (14) switches off in the event that oscillations occur whose amplitude exceeds a given extent.

15. The method according to one of the preceding claims,
**characterized in that** the processing computer (12) controls several, for example two to ten or, in particular, four production machines.

16. The method according to one of the preceding claims,
**characterized in that** the machining centre (10) is connected to one or more dental laboratories via long-distance data transmission lines and receives the order data from the dental laboratories.

17. The method according to one of the preceding claims,
**characterized in that** the production machine (14) uses an optical or mechanical scanner (30) instead of the machining tool (16) for detecting the shape of the dental product (18) and scans the dental product (18).

18. The method according to one of the preceding claims,
**characterized in that** the control device (20) compares both the machine data and also the scanned data with the order data.

19. A dental restoration device for producing a dental product (18) that is provided in a machining centre (10), said dental restoration part device comprising a processing computer (12) for driving a production device, with the aid of which the dental product (18) can be produced, wherein a data conversion of order data into control data can be effected with the aid of the processing computer (12), said control data controlling at least one production machine (14),
**characterized in that** a control device (20) is provided that comprises a comparator (22) to which the processing computer (12) is coupled, said comparator (22) comparing the order data with the data of a dental product (18) that at least indirectly has been produced by the processing computer, wherein the order data can be determined as a data packet by scanning a plastic impression or design model and can be transmitted to the dental restoration device.

20. The dental restoration device according to claim 19,
**characterized in that** the order data represents a virtual restoration.

21. The dental restoration device according to one of the claims 19 or 20,
**characterized in that** a scanner or sampler (30) is provided by means of which the produced dental product (18) can be scanned, wherein the comparator (22) is connected to the output of the scanner or sampler (30) for comparing the output data thereof with the order data.

## Revendications

1. Méthode pour la production d'un produit dentaire (18), de préférence une restauration dentaire, comprenant les étapes de:
- la fabrication d'une impression et, éventuellement, d'un modèle de l'impression, éventuellement après l'envoi à un laboratoire dentaire;
- le scannage de l'impression ou du modèle;
- la création d'un paquet de données d'une commande, éventuellement sous forme d'une restauration virtuelle, basée sur les résultats du scannage;
- l'envoi à un centre d'usinage (10);
- la transformation dans un ordinateur d'usinage (12) des données de la commande du paquet de données de la commande en données de contrôle pour l'usinage;
- l'envoi des données de contrôle à une machine-outil (14);
- la création du produit dentaire (18), en particulier de la restauration dentaire ;
- l'envoi de la restauration au laboratoire dentaire ou à un dentiste;
- la vérification de la conformité de la restauration au modèle;
- la finition de la restauration, en ajustant si nécessaire la couleur ou le recouvrement ;
- le cas échéant, l'envoi de la restauration au dentiste, et la vérification de la restauration par rapport à la conception, la forme et l'esthétique;
**caractérisé en ce que** après la fabrication du produit dentaire (18) et avant l'envoi du produit dentaire (18) les étapes suivantes sont effectuées:
- la création d'un paquet de données du produit dentaire (18) utilisant le format de données des données de la commande;
- la réalisation d'une comparaison des données entre les données de contrôle et l'ensemble des données du produit dentaire (18).

2. Méthode selon la revendication 1, **caractérisée en ce qu'**un modèle est créée et scanné dans un laboratoire dentaire ou cabinet dentaire, par lequel la restauration virtuelle est générée pour la provision des données de la commande et que les données de la commande sont transmises au centre d'usinage (10).

3. Méthode selon la revendication 1 ou 2, **caractérisé en ce que** le scannage du produit dentaire (18) a lieu dans le centre d'usinage (10) et le résultat du scannage est comparée avec les données de la commande, où de valeurs de tolérance sont prédéterminées, au-delà desquelles un comparateur (22) rejette le produit dentaire (18).

4. Méthode selon l'une des revendications précédentes, **caractérisée en ce que** la conversion des données de la commande en données de contrôle est effectuée par un ordinateur d'usinage (12) situé dans le centre d'usinage (10).

5. Méthode selon l'une des revendications précédentes, **caractérisée en ce que** le comparateur (22) travaille dans un dispositif de contrôle (20), où l'ordinateur d'usinage (12) est relié au comparateur (2), et où la comparaison des données de la commande avec les données du produit dentaire (18) traitées par l'ordinateur d'usinage (12) est effectuée dans le comparateur (22).

6. Méthode selon l'une des revendications précédentes, **caractérisé en ce qu'**un autre comparateur (32) est fourni, qui opère dans le dispositif de commande (20), où les données de la restauration dentaire scannées dans le centre d'usinage (10) sont comparées ou avec les donnée de la commande ou avec les données de contrôle.

7. Méthode selon l'une des revendications 1 à 7, **caractérisée en ce que** lors du scannage dans le centre d'usinage (10) des données sont générés dans un format correspondant au format des données de la commande.

8. Méthode selon l'une des revendications précédentes, **caractérisée en ce que** le scannage du produit dentaire (18) s'effectue pendant que le produit dentaire (18) est encore serré dans le dispositif de production et en particulier l'outil d'usinage (16) est échangé contre un scannage optique ou mécanique.

9. Méthode selon l'une des revendications 1 à 7, **caractérisée en ce que** le scannage du produit dentaire (18) est réalisée en dehors du dispositif de production et le scanner présente un dispositif de positionnement, par lequel le produit dentaire (18) est détectable avec les coordonnées correctes.

10. Méthode selon l'une des revendications précédentes, **caractérisée en ce que** les données traitées par l'ordinateur d'usinage (12) sont des données scannées, qui sont influencées par la transformation du produit dentaire (18) par la machine-outil que le produit dentaire (18) fini est scanné et les données scannées sont transmises vers le dispositif de commande (2).

11. Méthode selon l'une des revendications précédentes, **caractérisée en ce que** le dispositif de contrôle (20) capte également l'exécution de la commande et confirme celle-ci.

12. Méthode selon l'une des revendications précédentes, **caractérisée en ce que** l'ordinateur d'usinage (12) convertit par triangulation les coordonnées de point en surfaces triangulées pour la fourniture des données de la commande et que lors du scannage du produit dentaire (18) également des coordonnées de point sont converties par triangulation en surfaces triangulées et que les données de la commande sont comparées avec les données scannées dans le dispositif de contrôle (20).

13. Méthode selon l'une des revendications précédentes, **caractérisée en ce que** le scannage a lieu dans le centre d'usinage (10) et présente en particulier un balayage mécanique.

14. Méthode selon l'une des revendications précédentes, **caractérisée en ce que** le dispositif de contrôle (20) surveille la machine-outil (14) de façon continue et éteint la machine-outil (14) en cas d'oscillations dont l'amplitude dépasse un seuil prédéterminé.

15. Méthode selon l'une des revendications précédentes, **caractérisée en ce que** l'ordinateur d'usinage (12) contrôle plusieurs, par exemple deux à dix ou de préférence quatre machines-outils.

16. Méthode selon l'une des revendications précédentes, **caractérisée en ce que** le centre d'usinage (10) est en communication avec un ou plusieurs laboratoires dentaires par des lignes de transmission de données (28) et reçoit des données de la commande provenant des laboratoires dentaires.

17. Méthode selon l'une des revendications précédentes, **caractérisée en ce que** pour capter la forme du produit dentaire (18), la machine-outil (14) utilise un palpeur optique ou mécanique (30) au lieu de l'outil d'usinage (16) et balaie le produit dentaire (18).

18. Méthode selon l'une des revendications précédentes, **caractérisée en ce que** le dispositif de contrôle (20) compare aussi bien les données de la machine avec les données de la commande que les données scannées avec les données de la commande.

19. Dispositif de restauration dentaire pour créer un produit dentaire (18), qui est fourni dans un centre d'usinage (10) et avec un ordinateur d'usinage (12) pour commander un dispositif de traitement avec lequel le produit dentaire (18) peut être produit, où une conversion des données de la commande en données de contrôle avec lesquelles au moins une machine-outil (14) est contrôlable est réalisable par un traitement informatique, **caractérisé en ce qu'**un dispositif de contrôle (20) est fourni, qui présente un comparateur (22) auquel l'ordinateur d'usinage (12) est connecté, où ce comparateur (22) compare les données de contrôle de l'ordinateur d'usinage (12) avec des données d'un produit dentaire (18) générées au moins indirectement, ou les données de la commande sont déterminables en scannant une impression ou un modèle comme paquet de données et transmissibles vers le dispositif de restauration dentaire.

20. Dispositif de restauration dentaire selon la revendication 19, **caractérisé en ce que** les données de contrôle représentent une restauration virtuelle.

21. Dispositif de restauration dentaire selon la revendication 19 ou 20, **caractérisé en ce qu'**un scanneur ou un palpeur (30) est prévu avec lequel le produit dentaire (18) fabriqué peut être le scanné, où le comparateur (22) est connecté à la sortie du scanneur ou palpeur (30) afin de comparer les données de sortie avec les données de la commande.
